# EUROPÄISCHE PATENTSCHRIFT

(11) **EP 2 557 316 B1**
(45) Veröffentlichungstag und Bekanntmachung des Hinweises auf die Patenterteilung: **22.07.2020**
(21) Anmeldenummer: 12179476.2
(22) Anmeldetag: 07.08.2012
(51) Int. Cl.: F04D 19/04, F04D 29/063, F04D 29/059, F16C 19/00

(54) **VAKUUMPUMPE**
VACUUM PUMP
POMPE À VIDE

(30) Priorität: 10.08.2011 DE 102011109929
(43) Veröffentlichungstag der Anmeldung: 13.02.2013
(73) Patentinhaber: Pfeiffer Vacuum GmbH, 35614 Aßlar (DE)
(72) Erfinder: Hofmann, Bernd, 35753 Greifenstein (DE); Vorwerk, Peter, 35630 Ehringshausen (DE)
(74) Vertreter: Knefel, Cordula

(56) Entgegenhaltungen:
- EP-A2- 1 477 721
- EP-A2- 2 060 795
- DE-A1- 2 555 902
- DE-A1- 2 809 073
- DE-A1-102006 053 237

## Beschreibung

Die Erfindung betrifft eine Vakuumpumpe nach dem Oberbegriff des ersten Anspruches.

Vakuumpumpen, die als Strömungsarbeitsmaschinen gestaltet sind und beispielsweise auf einem molekularen oder dem Seitenkanalprinzip basieren, weisen wenigstens einen schnell drehenden Rotor auf. Dieser Rotor ist bei Drehzahlen von einigen zehntausend Umdrehungen pro Minute drehbar zu unterstützen. Für diese Funktion sind Wälzlager hervorragend geeignet und kommen daher sehr oft zum Einsatz. Diese Wälzlager müssen geschmiert werden.

Bei Vakuumpumpen mit kleinen Baugrößen kommt eine so genannte Filzschmierung zum Einsatz. Ein Beispiel für einen geschlossenen Kreislauf stellt die DE 10 2006 053 237 A1 vor. Ein Filzpaket dient als Schmiermittelspeicher, aus welchem über einen Abstreifer Schmiermittel auf einen wellenseitigen Konus übertragen werden. An diesem entlang wandert Schmiermittel in das Wälzlager. Das aus dem Wälzlager austretende Schmiermittel wird über kapillare Fördermittel zum Schmiermittelspeicher zurückgefördert.

Es wird beobachtet, dass zwar langsam, aber auf Dauer doch nachweisbar, die Schmiermittelmenge abnimmt. Dies verkürzt die Zeit zwischen notwendigen Servicearbeiten an der Pumpe.

Zum Stand der Technik (DE 25 55 902 A1) gehört eine Turbomolekularpumpe, bei der eine Welle durch Wälzlager gelagert ist. Die Wälzlager werden mit Schmiermittel geschmiert. Hierzu sind Schmiermittelspeicher vorgesehen, sowie Fördermittel zur Rückführung des Schmiermittels in die Schmiermittelspeicher. Diese zum Stand der Technik gehördende Schmiermittelführung kann weiter verbessert werden.

Weiterhin gehört zum Stand der Technik (DE 10 2006 053 237 A1) ein Lagermodul für eine Vakuumpumpe. Auch hier werden Wälzlager mit Schmiermittel geschmiert. Hierzu ist ein Schmiermittelspeicher vorhanden, aus dem das Schmiermittel dem Wälzlager zugeführt wird. Ein Fördermittel dient dazu, überschüssiges Schmiermittel dem Schmiermittelspeicher wieder zuzuführen. Dieses zum Stand der Technik gehörende Schmiermittelsystem kann weiter verbessert werden, insbesondere im Hinblick auf einen Über-Kopf-Betrieb der Vakuumpumpe.

Weiterhin gehört zum Stand der Technik (EP 2 060 792 A2) eine Vakuumpumpe, bei der ein Schmiermittelvorratsbehälter außerhalb des Gehäuses, in dem die Welle und das Wälzlager gelagert sind, vorgesehen ist. Dieser zum Stand der Technik gehörende Schmiermittelkreislauf ist bei einer Vakuumpumpe im Über-Kopf-Betrieb kaum einsetzbar.

Zum Stand der Technik (EP 1 477 721 A2) gehört eine Einrichtung zur Ölversorgung von Lagerstellen einer rotierenden Welle. Auch diese zum Stand der Technik gehörende Einrichtung ist bei einer Vakuumpumpe, die im Über-Kopf-Betrieb eingesetzt werden soll, kaum einsetzbar.

Es war daher Aufgabe, eine Vakuumpumpe zu schaffen, bei der die Verluste innerhalb der Umlaufschmierung verringert sind.

Die Aufgabe wird gelöst durch die Merkmale des Anspruches 1. Vorteilhafte Ausgestaltungen der Erfindung sind in den Unteransprüchen 2 bis 13 angegeben.

Die erfindungsgemäße Vakuumpumpe, insbesondere Molekularvakuumpumpe mit einer schnell drehenden Welle, einem diese drehbar unterstützenden Wälzlager, einem Schmiermittelspeicher zur Aufnahme eines Schmiermittels, einer Schmiermittelzufuhr für einen Schmiermittelfluß aus dem Schmiermittelspeicher zur Welle und einem Schmiermittelrücklauf für einen Schmiermittelfluß aus dem Wälzlager in den Schmiermittelspeicher, wobei der Schmiermittelrücklauf ein Fördermittel umfasst, welches eine Förderhöhe für das Schmiermittel und eine Länge aufweist, die so bemessen sind, dass aus dem Wälzlager austretendes Schmiermittel bis auf die dem Wälzlager abgewandte Seite der Schmiermittelzufuhr gefördert wird, wobei die Schmiermittelzufuhr einen Abstreifer umfasst, ist dadurch gekennzeichnet, dass die Förderhöhe und die Länge größer als ein Abstand von dem Abstreifer zum Wälzlager ist.

Die Gestaltung eines Fördermittels im Schmiermittelrücklauf, derart, dass es eine Förderhöhe für das Schmiermittel und eine Länge aufweist, die so bemessen sind, dass aus dem Wälzlager austretendes Schmiermittel bis auf die dem Wälzlager abgewandten Seite der Schmiermittelzufuhr gefördert wird, führt zu einer sicheren Befüllung des Schmiermittelspeichers auch im Kopfüberbetrieb. Da die Rückförderung stark verbessert arbeitet, werden die Verluste der Umlaufschmierung verringert. Insbesondere wird verhindert, dass Schmiermittel aus dem Wälzlager auf der der Schmiermittelzufuhr abgewandten Seite aus dem Kreislauf austritt. Die Vorteile sind besonders ausgeprägt, wenn Schmiermittel mit niedriger Viskosität zum Einsatz kommen, insbesondere solche mit Perfluorpolyetheranteilen.

Die erfindungsgemäße Gestaltung des Fördermittels weist den Vorteil auf, dass, wie schon ausgeführt, eine sichere Befüllung des Schmiermittelspeichers auch im Kopfüberbetrieb, das heißt entgegen der Schwerkraft erzielt wird.

Gemäß einer besonders bevorzugten Ausführungsform sind ein Ablauf für das Schmiermittel und der Schmiermittelspeicher durch das Fördermittel miteinander verbunden. Hierdurch ist gewährleistet, dass das Schmiermittel, welches in dem Ablauf des Wälzlagers sich beispielsweise sammelt und durch den Ablauf abgeführt wird, zuverlässig bis in den Schmiermittelspeicher geführt wird.

Eine weitere vorteilhafte Ausführungsform sieht vor, dass der Ablauf des Schmiermittels aus dem Wälzlager in einer durch die Welle festgelegten axialen Richtung auf der einen Seite des Wälzlager angeordnet ist und dass der Schmiermittelspeicher in einer durch die Welle festgelegten axialen Richtung auf der anderen Seite des Wälzlagers angeordnet ist.

Diese Ausführungsform weist den Vorteil auf, dass das Schmiermittellager das Schmiermittel vorzugsweise im Bereich eines Konus, der auf der Welle sitzt, zuführt. Durch Drehung der Welle und die auftretenden Fliehkräfte wird das Schmiermittel automatisch in Richtung des Wälzlagers transportiert.

Überschüssiges Schmiermittel wird auf der anderen Seite des Wälzlagers an einen Ablauf abgegeben, von wo es mittels des Fördermittels in den Schmiermittelspeicher zurückgeführt wird.

Eine weitere vorteilhafte Ausführungsform der Erfindung sieht vor, dass das Fördermittel poröses Polytetrafluorethylen umfasst. Dieses Material hat den Vorteil, dass es chemisch beständig gegen Schmiermittel und Verunreinigungen in demselben ist.

Gemäß einer weiteren Ausführungsform ist vorgesehen, dass das Fördermittel einen Stab umfasst. Ein Stab hat den Vorteil, dass dieser in einer preiswert in einem Gehäuse der Vakuumpumpe herstellbaren Bohrung angeordnet werden kann.

Vorteilhaft ist eine Mehrzahl von Stäben in Umfangsrichtung um die Welle herum verteilt angeordnet. Hierdurch ist gewährleistet, dass das aus dem Wälzlager austretende Schmiermittel dort, wo es austritt, zurückgeführt wird. Darüber hinaus wird eine gleichmäßige Wiederbefüllung des Schmiermittelspeichers gewährleistet.

Gemäß einer weiteren besonders bevorzugten Ausführungsform der Erfindung durchsetzt das Fördermittel den Schmiermittelspeicher in einer durch die Welle festgelegten axialen Richtung vollständig. Diese Ausführungsform weist den Vorteil auf, dass der Schmiermittelspeicher vollständig und gleichmäßig mit dem rückgeführten Schmiermittel befüllt wird. Darüber hinaus wird der Schmiermittelspeicher, der vorteilhaft aus einem filzartigen Material besteht, derart befüllt, dass im Bereich eines Abstreifers, über den das Schmiermittel aus dem Schmiermittelspeicher austritt, auf jeden Fall genügend Schmiermittel vorhanden ist, dadurch dass das Fördermittel den Schmiermittelspeicher vollständig oder fast vollständig durchsetzt.

Eine vorteilhafte Ausführungsform der Erfindung sieht vor, dass der Schmiermittelspeicher ein filzartiges Material zur Speicherung des Schmiermittels umfasst. Hierdurch lässt sich ein preiswerter Schmiermittelspeicher gestalten, indem sich das Schmiermittel gleichmäßig verteilt.

Die Schmiermittelzufuhr umfasst einen Abstreifer, der vorteilhaft ebenfalls aus einem filzartigen Material besteht. Durch diese Maßnahme legt sich der Abstreifer weitgehend abnutzungsfrei an den Konus auf der Welle an und gibt das Schmiermittel zuverlässig an die Welle ab.

Das Schmiermittel umfasst vorteilhaft Perfluorpolyether. Diese Schmiermittel weisen sehr gute Schmiermitteleigenschaften und darüber hinaus eine niedrige Viskosität auf.

Gemäß einer weiteren vorteilhaften Ausführungsform der Erfindung ist auf der dem Schmiermittelspeicher abgewandten Seite des Wälzlagers eine Dichtung angeordnet. Diese Dichtung gewährleistet, dass Schmiermittel nicht in Richtung der Pumpstufe austritt.

Besonders vorteilhaft ist die Förderhöhe des Fördermittels größer ausgebildet als eine Förderhöhe des Schmiermittelspeichers. Hierdurch wird eine sichere Befüllung des Schmiermittelspeichers auch im Kopfüberbetrieb erreicht.

Gemäß einer weiteren vorteilhaften Ausführungsform der Erfindung ist vorgesehen, dass das Fördermittel einen runden, eckigen, ovalen oder bogenförmigen Querschnitt aufweist. Durch die geeignete Wahl des Querschnittes lassen sich die Fördereigenschaften des Förderstabes positiv beeinflussen. Ein bogenförmiger Querschnitt weist den Vorteil auf, dass eine größere Menge des Schmiermittels aufgenommen werden kann, wenn man davon ausgeht, dass das Schmiermittel kreisförmig um die Welle der Vakuumpumpe gesehen abgegeben wird.

Anhand eines Ausführungsbeispieles soll die Erfindung näher erläutert und die Darstellung ihrer Vorteile vertieft werden. Es zeigen:
- Fig. 1: einen Längsschnitt durch eine Vakuumpumpe in Kopfüberstellung;
- Fig. 2: einen Längsschnitt durch die Lageranordnung der Vakuumpumpe längs der Welle;
- Fig. 3: einen Schnitt durch die Lageranordnung der Vakuumpumpe quer zur Welle entlang der Linie I-I' der Fig. 2.

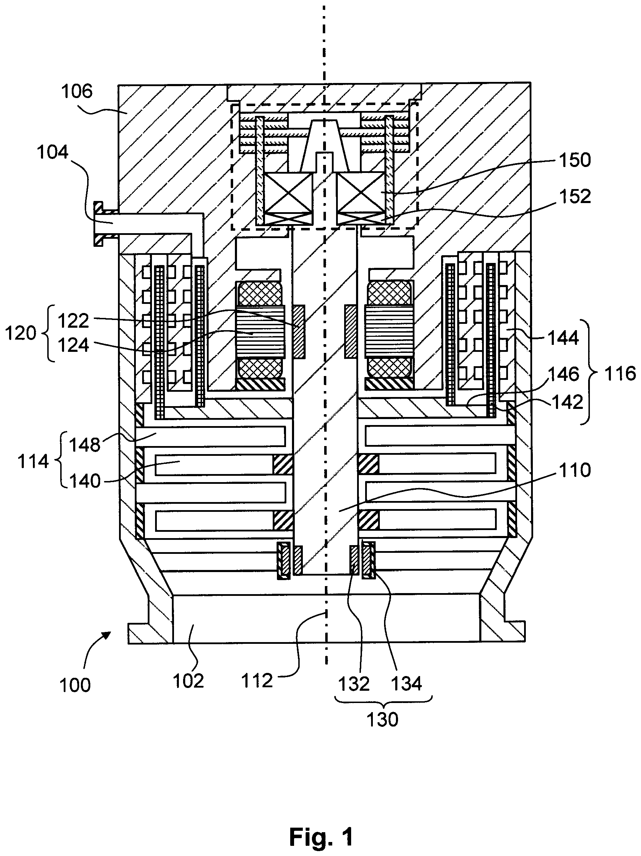

In Fig. 1 ist ein Schnitt durch eine Vakuumpumpe 100 gezeigt. Sie ist im Kopfüberbetrieb dargestellt, die Schwerkraftrichtung ist in der Figur auf die untere Blattkante gerichtet.

Die Vakuumpumpe 100 saugt Gas durch eine im mehrteiligen Gehäuse 106 vorgesehene Ansaugöffnung 102 an und stößt dieses verdichtet aus einem Gasauslass 104 aus. Bewirkt wird die Verdichtung des Gases von einem im vorgestellten Beispiel turbomolekular gestalteten Pumpmechanismus, der beschaufelte Rotorscheiben 140 umfasst, die sich mit ruhenden und ebenfalls beschaufelten Statorscheiben 148 entlang einer Wellenachse 112 abwechseln. Oft wird die Gesamtheit aller Rotor- und Statorscheiben als Pumpstufe 114 bezeichnet. Eine solche Pumpstufe 114 kann eines oder mehrere Paare aus Rotor- und Statorscheiben beinhalten. Insbesondere wird die Bezeichnung Pumpstufe gewählt, wenn die Vakuumpumpe 100 noch eine weitere Pumpstufe mit anderem Wirkprinzip umfasst. Im gezeigten Beispiel ist eine so genannte Holweckpumpstufe 116 vorgesehen, die vorhanden sein kann, aber nicht vorhanden sein muss. Sie umfasst wenigstens einen Zylinder 142, der an einer Nabe 146 befestigt ist und in einem mit gewindeartig angeordneten Kanälen versehenen Holweckstator 144 rotiert. Rotorscheiben 140, Nabe 146 und Zylinder 142 sind an einer Welle 110 befestigt.

Ein Antrieb 120 versetzt die Welle 110 in schnelle Drehung, wobei die Drehzahl vom Wirkprinzip der Pumpstufen abhängt, für molekulare Vakuumpumpen im Bereich einiger zehntausend Umdrehungen pro Minute liegt. Der Antrieb umfasst eine Motorspule 124, durch deren Bestromung ein rotierendes Magnetfeld erzeugt wird, welches einen auf der Welle 110 angebrachten Motormagneten 122 mitnimmt.

Die Welle 110 wird an ihrem der Ansaugöffnung zugewandten Ende von einem Permanentmagnetlager 130 getragen, welches aus permanentmagnetischen Rotormagnetringen 132 und Statormagnetringen 134 aufgebaut ist. Dieses Lager 130 muss nicht zwingend als Permanentmagnetlager ausgeführt und/oder am Wellenende angeordnet sein. Ein Wälzlager 150, welches auf der der Ansaugöffnung 102 abgewandten Seite der Pumpstufe angeordnet ist, kann ebenfalls die Tragfunktion übernehmen.

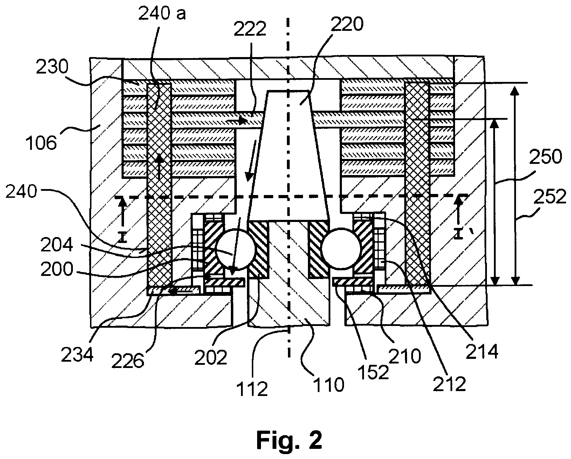

Das der Ansaugöffnung 102 abgewandte Ende der Welle 110 wird von einer Lageranordnung unterstützt, die ein Wälzlager 150 und ein zwischen Wälzlager und Pumpstufe angeordnetes Dichtelement 152 enthält und anhand Fig. 2 näher erläutert werden wird.

In Fig. 2 ist der gestrichelte Kasten aus Fig. 1 im Detail dargestellt.

Auf der Welle 110 ist ein Innenring 202 des Wälzlagers 150 befestigt. Zwischen ihm und einem gehäuseseitig vorgesehenen Außenring 200 befinden sich Wälzelemente 204.

Der Außenring 200 ist von elastischen Elementen 210, 212 und 214 in Richtung parallel und quer zur Wellenachse 112 schwingfähig im Gehäuse 106 gelagert. Diese Elemente 210, 212, 214 können als elastomere Ringe gestaltet sein.

Im Gehäuse 106 ist ein Schmiermittelspeicher 230 vorgesehen, der vorteilhaft aus einem saugfähigen Material gestaltet ist, beispielsweise einem mehrlagigen Filz. Die Mehrlagigkeit erlaubt eine einfache geometrische Anpassung. Filze sind mit verschiedenen Eigenschaften erhältlich, so dass einfach und kostengünstig eine Anpassung an das Schmiermittel erfolgen kann.

Vom Schmiermittelspeicher 230 erstreckt sich wenigstens ein Abstreifer 222 auf die Wellenachse 112 hin und steht in gleitendem, berührendem Kontakt mit einer auf der Welle 110 befestigten konischen Mutter 220.

Sobald sich die Welle 110 in schneller Drehung befindet, tritt Schmiermittel über den Abstreifer 222 aus dem Schmiermittelspeicher 230 auf die konische Oberfläche der konischen Mutter 220. Aufgrund von Fliehkräften wird das Schmiermittel entlang des Konus in das Wälzlager 150 hineingefördert. Der Schmiermittelfluss ist mit Pfeilen markiert.

Auf der dem Konus abgewandten Seite der Wälzelemente 204 ist eine Dichtung 152 angeordnet, die als einstückig mit dem Außenring 200 ausgeführte Scheibe gestaltet sein kann. Diese verringert einen Spalt zwischen Welle 110 und Außenring 200 und bewirkt so eine Verringerung der Schmiermittelleckage. Im Wälzlager 150 ist zwischen Dichtelement 152 und Wälzelementen 204 ein Ablauf 226 vorgesehen, durch den Schmiermittel aus dem Inneren des Wälzlagers 150 austreten kann. Es gelangt dann zu einem Schmiermittelrücklauf 240.

Der Schmiermittelrücklauf 240 umfasst ein Fördermittel 240a, mit dem das Schmiermittel vom Wälzlager 150 zum Schmiermittelspeicher 230 zurückgefördert wird. Dieses Fördermittel 240a ist bevorzugt aus porösem Material hergestellt, welches über Kapillarkräfte eine Förderung des Schmiermittels bewirkt. Vorteilhaft ist es, poröses Polytetrafluorethylen zu verwenden, da es chemisch beständig gegen Schmiermittel und Verunreinigungen in demselben ist. Vorteilhaft ist es, das Fördermittel als Stab zu gestalten, insbesondere als Rundstab, da dieser von kostengünstig herstellbaren Bohrungen aufgenommen werden kann. Vorrangig für die Wahl des Querschnitts ist jedoch die Förderwirkung.

Das Fördermittel 240a weist eine Förderhöhe und eine Länge 252 auf, die so bemessen sind, dass aus dem Wälzlager 150 austretendes Schmiermittel bis auf die dem Wälzlager abgewandte Seite der Schmiermittelzufuhr gefördert wird.

Dies wird im gezeigten Beispiel erreicht, indem die Förderhöhe und die Länge 252 größer als ein Abstand 250 vom Abstreifer 222 zum Wälzlager 150 ist. Die Förderhöhe wird bei porösem Material wie folgt bestimmt: In einen Schmiermittelvorrat wird das Material hineingestellt. Durch Kapillarkräfte steigt das Schmiermittel im Stab entgegen der Schwerkraft auf. Die erreichte Höhe über der Oberfläche des Schmiermittelvorrats entspricht dann der Förderhöhe. Der Abstand vom Abstreifer 222 zum Wälzlager 150 hängt von der Stelle ab, an der das Schmiermittel aus dem Wälzlager 150 austritt. Steht das Fördermittel in direktem Kontakt mit dem Ablauf 226, bezieht sich der Abstand auf den Punkt, an dem sich der Ablauf 226 befindet. Bei Anwesenheit eines Radialfördermittels 234 bezieht sich die Länge auf die Ausdehnung zwischen dem Punkt, an dem das Radialfördermittel 234 und das Fördermittel 240a in berührendem Kontakt miteinander stehen, und dem Punkt, an dem das Fördermittel 240a auf der dem Wälzlager 150 abgewandten Seite des Abstreifers 222 endet.

Das Radialfördermittel 234, welches vorteilhaft als Filzscheibe gestaltet sein kann, kann vorgesehen sein, um Schmiermittel zunächst vom Wälzlager 150 weg in radialer Richtung nach außen zu führen. Dies ist geometrisch vorteilhaft, denn es wird Raum für die schwingfähige Halterung des Außenringes 200 geschaffen.

Um eine besonders gute Wirkung zu erzielen, kann das Fördermittel 240a in Form eines Stabes so ausgeführt sein, dass es den Schmiermittelspeicher 230 vollständig, insbesondere in einer durch die Welle 110 festgelegten axialen Richtung, durchsetzt oder bei einem mehrlagigen Schmiermittelspeicher 230 wenigstens bis in die Lage führt, die auf der dem Wälzlager 150 abgewandten Seite am äußersten liegt. Hierdurch wird in Kopfüberstellung gewährleistet, dass der Schmiermittelspeicher 230 bis in diese Lage gefüllt wird.

Eine sichere Befüllung im Kopfüberbetrieb wird erreicht, wenn die Förderhöhe des Fördermittels 240a größer ist als eine Förderhöhe des Schmiermittelspeichers 230 bemessen ist.

Das Radialfördermittel 234 und/oder der Schmiermittelrücklauf 240, der aus dem Fördermittel 240a besteht, und/ oder der Schmiermittelspeicher 230 und/oder der Abstreifer 222 bestehen vorteilhaft aus einem saugfähigen Material mit kapillarer Wirkung, beispielsweise aus einem Filz.

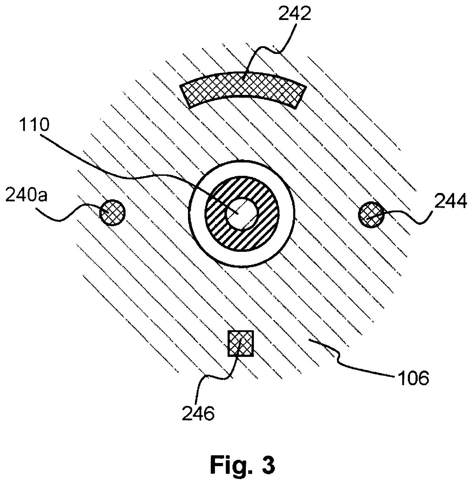

Einen Schnitt quer zur Welle 110 entlang der Linie I-I' aus Fig. 2 zeigt Fig. 3. Mehrere Fördermittel 240a, 242, 244 und 246 können in einem Umkreis um die Welle 110 vorgesehen sein. Dadurch wird erreicht, dass die Vakuumpumpe 100 in verschiedenen Einbaulagen um die Wellenachse 112 gedreht eingebaut werden kann. Der Querschnitt des Fördermittels 240a muss dabei nicht zwingend rund sein. Eckige Querschnitte für das Fördermittel 246 sind denkbar. Auch ein bogenförmig ausgedehntes Fördermittel 242 kann die notwendige Wirkung erzielen.

Die vorgenannten Gestaltungsmerkmale wirken besonders gut mit Schmiermitteln auf Basis von Perfluorpolyethern zusammen, die eine niedrige Viskosität aufweisen und daher leichter zu Verlusten im Kopfüberbetrieb neigen. Durch die gesicherte Rückförderung in den Schmiermittelspeicher ist hier die Verringerung der Verluste besonders stark ausgeprägt.

### Bezugszahlen

- 100: Vakuumpumpe
- 102: Ansaugöffnung
- 104: Gasauslass
- 106: Gehäuse
- 110: Welle
- 112: Wellenachse
- 114: Pumpstufe
- 116: Holweckpumpstufe
- 120: Antrieb
- 122: Motormagnet
- 124: Motorspule
- 130: Permanentmagnetlager
- 132: Rotormagnetringe
- 134: Statormagnetringe
- 140: Rotorscheiben
- 142: Zylinder
- 144: Holweckstator
- 146: Nabe
- 148: Statorscheiben
- 150: Wälzlager
- 152: Dichtelement
- 200: Außenring
- 202: Innenring
- 204: Wälzelemente
- 210: elastische Elemente
- 212: elastische Elemente
- 214: elastische Elemente
- 220: konische Mutter
- 222: Abstreifer
- 226: Ablauf
- 230: Schmiermittelspeicher
- 234: Radialfördermittel
- 240: Schmiermittelrücklauf
- 240a: Fördermittel
- 242: Fördermittel
- 244: Fördermittel
- 246: Fördermittel
- 250: Abstand
- 252: Länge

## Patentansprüche

1. Vakuumpumpe, insbesondere Molekularvakuumpumpe, mit einer schnell drehenden Welle (110), einem diese drehbar unterstützenden Wälzlager (150), einem Schmiermittelspeicher (230) zur Aufnahme eines Schmiermittels, einer Schmiermittelzufuhr für einen Schmiermittelfluss aus dem Schmiermittelspeicher (230) zur Welle (110) und einem Schmiermittelrücklauf (240) für einen Schmiermittelfluss aus dem Wälzlager (150) in den Schmiermittelspeicher (230), wobei der Schmiermittelrücklauf (240) ein Fördermittel (240a, 242, 244, 246) umfasst, welches eine Förderhöhe für das Schmiermittel und eine Länge (252) aufweist, die so bemessen sind, dass aus dem Wälzlager (150) austretendes Schmiermittel bis auf die dem Wälzlager (150) abgewandte Seite der Schmiermittelzufuhr gefördert wird, und wobei die Schmiermittelzufuhr einen Abstreifer (222) umfasst, **dadurch gekennzeichnet, dass** die Förderhöhe und die Länge (252) größer als ein Abstand (250) von dem Abstreifer (222) zum Wälzlager (150) ist.

2. Vakuumpumpe nach Anspruch 1, **dadurch gekennzeichnet, dass** ein Ablauf für das Schmiermittel (226) und der Schmiermittelspeicher (230) durch das Fördermittel (240a, 242, 244, 246) miteinander verbunden sind.

3. Vakuumpumpe nach Anspruch 1 oder 2, **dadurch gekennzeichnet, dass** der Ablauf (226) für das Schmiermittel aus dem Wälzlager (150) in einer durch die Welle (110) festgelegten axialen Richtung auf der einen Seite des Wälzlagers (150) angeordnet ist, und dass der Schmiermittelspeicher (230) in einer durch die Welle (110) festgelegten axialen Richtung auf der anderen Seite des Wälzlagers (150) angeordnet ist.

4. Vakuumpumpe nach einem der vorhergehenden Ansprüche, **dadurch gekennzeichnet, dass** das Fördermittel (240a, 242, 244, 246) poröses Polytetrafluorethylen umfasst.

5. Vakuumpumpe nach einem der vorhergehenden Ansprüche, **dadurch gekennzeichnet, dass** der Schmiermittelrücklauf (240) wenigstens zwei Fördermittel (240a, 242, 244, 246) umfasst.

6. Vakuumpumpe nach Anspruch 4, **dadurch gekennzeichnet, dass** eine Mehrzahl von Fördermitteln (240a, 242, 244, 246) in Umfangsrichtung um die Welle (110) herum verteilt angeordnet ist.

7. Vakuumpumpe nach einem der vorhergehenden Ansprüche, **dadurch gekennzeichnet, dass** das Fördermittel (240a, 242, 244, 246) den Schmiermittelspeicher (230) in einer durch die Welle (110) festgelegten axialen Richtung vollständig durchsetzt.

8. Vakuumpumpe nach einem der vorhergehenden Ansprüche, **dadurch gekennzeichnet, dass** der Schmiermittelspeicher (230) ein filzartiges Material zur Speicherung des Schmiermittels umfasst.

9. Vakuumpumpe nach einem der vorhergehenden Ansprüche, **dadurch gekennzeichnet, dass** die Schmiermittelzufuhr einen Abstreifer (222, 224) umfasst.

10. Vakuumpumpe nach einem der vorhergehenden Ansprüche, **dadurch gekennzeichnet, dass** das Schmiermittel Perfluorpolyether umfasst.

11. Vakuumpumpe nach einem der vorhergehenden Ansprüche, **dadurch gekennzeichnet, dass** auf der dem Schmiermittelspeicher (230) abgewandten Seite des Wälzlagers (150) eine Dichtung (152) angeordnet ist.

12. Vakuumpumpe nach einem der vorhergehenden Ansprüche, **dadurch gekennzeichnet, dass** die Förderhöhe des Fördermittels (240a, 242, 244, 246) größer ist als eine Förderhöhe des Schmiermittelspeichers (230).

13. Vakuumpumpe nach einem der vorhergehenden Ansprüche, **dadurch gekennzeichnet, dass** das Fördermittel (240a, 242, 244, 246) einen runden, eckigen, ovalen oder bogenförmigen Querschnitt aufweist.

## Claims

1. A vacuum pump, in particular a molecular vacuum pump, having a fast-rotating shaft (110), a roller bearing (150) that supports the shaft (110) in rotary manner, a lubricant storage arrangement (230) for receiving a lubricant, a lubricant supply line for a flow of lubricant from the lubricant storage arrangement (230) to the shaft (110), and a lubricant return line (240) for a flow of lubricant from the roller bearing (150) to the lubricant storage arrangement (230), wherein the lubricant return line (240) includes a conveying device (240a, 242, 244, 246) that has a conveying height for the lubricant and a length (252) that are dimensioned such that lubricant coming from the roller bearing (150) is conveyed as far as the side of the lubricant supply line remote from the roller bearing (150), and wherein the lubricant supply line includes a wiper (222),
**characterised in that** the conveying height and the length (252) are greater than a spacing (250) between the wiper (222) and the roller bearing (150).

2. A vacuum pump according to Claim 1, **characterised in that** a drain for the lubricant (226) and the lubricant storage arrangement (230) are connected to one another by the conveying device (240a, 242, 244, 246).

3. A vacuum pump according to Claim 1 or 2, **characterised in that** the drain (226) for draining the lubricant from the roller bearing (150) is arranged in an axial direction determined by the shaft (110) on the one side of the roller bearing (150), and **in that** the lubricant storage arrangement (230) is arranged in an axial direction determined by the shaft (110) on the other side of the roller bearing (150).

4. A vacuum pump according to one of the preceding claims, **characterised in that** the conveying device (240a, 242, 244, 246) comprises porous polytetrafluoroethylene.

5. A vacuum pump according to one of the preceding claims, **characterised in that** the lubricant return line (240) includes at least two conveying devices (240a, 242, 244, 246).

6. A vacuum pump according to Claim 4, **characterised in that** a plurality of conveying devices (240a, 242, 244, 246) are arranged distributed around the shaft (110) in the peripheral direction.

7. A vacuum pump according to one of the preceding claims, **characterised in that** the conveying device (240a, 242, 244, 246) passes entirely through the lubricant storage arrangement (230) in an axial direction determined by the shaft (110).

8. A vacuum pump according to one of the preceding claims, **characterised in that** the lubricant storage arrangement (230) comprises a felt-like material for storing the lubricant.

9. A vacuum pump according to one of the preceding claims, **characterised in that** the lubricant supply line includes a wiper (222, 224).

10. A vacuum pump according to one of the preceding claims, **characterised in that** the lubricant comprises perfluoropolyether.

11. A vacuum pump according to one of the preceding claims, **characterised in that** a seal (152) is arranged on the side of the roller bearing (150) remote from the lubricant storage arrangement (230).

12. A vacuum pump according to one of the preceding claims, **characterised in that** the conveying height of the conveying device (240a, 242, 244, 246) is greater than a conveying height of the lubricant storage arrangement (230).

13. A vacuum pump according to one of the preceding claims, **characterised in that** the conveying device (240a, 242, 244, 246) has a circular, polygonal, oval or arcuate cross section.

## Revendications

1. Pompe à vide, notamment pompe à vide moléculaire, comprenant un arbre à rotation rapide (110), un palier à roulement (150) soutenant celui-ci en rotation, un réservoir de lubrifiant (230) destiné à recevoir un lubrifiant, une alimentation de lubrifiant pour un flux de lubrifiant provenant du réservoir de lubrifiant (230) vers l'arbre (110) et un retour de lubrifiant (240) pour un flux de lubrifiant provenant du palier à roulement (150) dans le réservoir de lubrifiant (230), le retour de lubrifiant (240) comprenant un moyen de transport (240a, 242, 244, 246), qui présente une hauteur de transport pour le lubrifiant et une longueur (252), qui sont calculées de telle sorte que le lubrifiant sortant du palier à roulement (150) soit transporté jusqu'au côté, détourné du palier à roulement (150), de l'alimentation de lubrifiant, et l'alimentation de lubrifiant comprenant un racleur (222), **caractérisée en ce que** la hauteur de transport et la longueur (252) sont supérieures à un écart (250) du racleur (222) au palier à roulement (150).

2. Pompe à vide selon la revendication 1, **caractérisée en ce qu'**une évacuation pour le lubrifiant (226) et le réservoir de lubrifiant (230) sont raccordés l'un avec l'autre par le moyen de transport (240a, 242, 244, 246).

3. Pompe à vide selon la revendication 1 ou 2, **caractérisée en ce que** l'évacuation (226) pour le lubrifiant provenant du palier à roulement (150) est agencée sur un côté du palier à roulement (150) dans une direction axiale fixée par l'arbre (110), et **en ce que** le réservoir de lubrifiant (230) est agencé sur l'autre côté du palier à roulement (150) dans une direction axiale fixée par l'arbre (110).

4. Pompe à vide selon l'une quelconque des revendications précédentes, **caractérisée en ce que** le moyen de transport (240a, 242, 244, 246) comprend du polytétrafluoroéthylène poreux.

5. Pompe à vide selon l'une quelconque des revendications précédentes, **caractérisée en ce que** le retour de lubrifiant (240) comprend au moins deux moyens de transport (240a, 242, 244, 246).

6. Pompe à vide selon la revendication 4, **caractérisée en ce qu'**une pluralité de moyens de transport (240a, 242, 244, 246) est répartie dans la direction circonférentielle autour de l'arbre (110).

7. Pompe à vide selon l'une quelconque des revendications précédentes, **caractérisée en ce que** le moyen de transport (240a, 242, 244, 246) traverse entièrement le réservoir de lubrifiant (230) dans une direction axiale fixée par l'arbre (110).

8. Pompe à vide selon l'une quelconque des revendications précédentes, **caractérisée en ce que** le réservoir de lubrifiant (230) comprend un matériau feutré pour le stockage du lubrifiant.

9. Pompe à vide selon l'une quelconque des revendications précédentes, **caractérisée en ce que** l'alimentation de lubrifiant comprend un racleur (222, 224).

10. Pompe à vide selon l'une quelconque des revendications précédentes, **caractérisée en ce que** le lubrifiant comprend du perfluoropolyéther.

11. Pompe à vide selon l'une quelconque des revendications précédentes, **caractérisée en ce qu'**un joint d'étanchéité (152) est agencé sur le côté, détourné du réservoir de lubrifiant (230), du palier à roulement (150).

12. Pompe à vide selon l'une quelconque des revendications précédentes, **caractérisée en ce que** la hauteur de transport du moyen de transport (240a, 242, 244, 246) est supérieure à une hauteur de transport du réservoir de lubrifiant (230).

13. Pompe à vide selon l'une quelconque des revendications précédentes, **caractérisée en ce que** le moyen de transport (240a, 242, 244, 246) présente une section transversale ronde, angulaire, ovale ou arquée.
